# EUROPEAN PATENT SPECIFICATION

(11) **EP 3 268 103 B1**
(45) Date of publication and mention of the grant of the patent: **11.08.2021**
(21) Application number: 16713661.3
(22) Date of filing: 04.03.2016
(51) Int. Cl.: B01D 24/00, B01D 15/00, B01D 17/02, B01D 39/18, C02F 1/40, B01D 17/04, C02F 1/00, C02F 1/28, C02F 101/32, B01D 24/10, B01D 24/46, C02F 103/36, C02F 103/10, C02F 3/04, C02F 3/28

(54) **FILTER BED BACKWASH SYSTEM AND PROCESS WITH RECYCLED GAS**
FILTERBETTRÜCKSPÜLSYSTEM UND VERFAHREN MIT RECYCLEGAS
SYSTÈME ET PROCÉDÉ DE LAVAGE À CONTRE-COURANT DE LIT DE FILTRATION AVEC DU GAZ RECYCLÉ

(30) Priority: 12.03.2015 US 201562132097 P; 13.03.2015 US 201562133117 P
(43) Date of publication of application: 17.01.2018
(73) Proprietor: Siemens Energy, Inc., Orlando, FL 32826-2399 (US)
(72) Inventor: FELCH, Chad L., Kronenwetter, Wisconsin 54455 (US); MUNSON, Stuart J., Minneapolis, Minnesota 55408 (US)
(74) Representative: Isarpatent
(86) International application number: PCT/US2016/020801
(87) International publication number: WO 2016/144716

(56) References cited:
- DE-A1- 19 509 367
- US-A- 5 401 405
- US-A1- 2014 061 134
- US-B2- 8 747 667

## Description

### CROSS-REFERENCE TO RELATED APPLICATIONS

This application claims benefit of the March 12, 2015 filing date of U.S. Provisional Application No. 62/132,097 and the March 13, 2015 filing date of U.S. Provisional Application No. 62/133,117.

### FIELD

The invention relates to a method according to the appended claim 5 for recycling gas from a backwash process that removes contaminants from a bed of filtration media. The invention also relates to a system according to appended claim 1 comprising a water treatment device and a separator, the system configured for recycling gas from a mixed liquid-gas stream.

### BACKGROUND

Oil and gas industry processes are typically divided into three major sectors: upstream, midstream, and downstream. Upstream processes typically include searching for potential underground or underwater crude oil and natural gas fields, drilling of exploratory wells, and subsequently drilling and operating the wells that recover and bring the crude oil and/or raw natural gas to the surface. Midstream processes typically include transportation (by pipeline, rail, barge, oil tanker, or truck), storage, and wholesale marketing of crude oil from production sites to refineries and delivering the various refined products to downstream distributors. Natural gas pipeline networks aggregate gas from natural gas purification plants and deliver it to downstream customers, such as local utilities. The downstream processing sector commonly refers to the refining of petroleum crude oil and the processing and purification of raw natural gas, as well as the distribution of products derived from crude oil and natural gas.

Filtration media, also referred to as simply "media," may be useful for a variety of processing techniques and applications, including filtering, coalescing, separating, increasing residence time of a liquid in a vessel containing the media, and functioning as an adsorbant or absorbent. For example, filter media may be used for separating liquids from gases, liquids from other liquids, and separating suspended solids, colloidal, and particulate matter from a fluid stream. In addition, filter media may be used to coalesce smaller droplets of one or more components in a liquid into larger droplets. For example, media filters may be used for the removal of suspended solids and free oil from one or more solutions.

Filter media, including walnut shell filters, may be used to remove free oil and suspended solids from water in refineries and for onshore produced water processing, such as the upstream, midstream, and downstream processes discussed above. For example, filtration media may be used as part of an overall treatment train that follows upstream and/or downstream oil removal technologies. Filtration using filtration media may include introducing water in a downward flow through a bed of filtration media that absorbs oil and filters suspended solids. The filtration media has an equal affinity for oil and water, and therefore oil can be captured on the surface of the filtration media. During forward-flow operations where oil and solids are being filtered, the system may be pressurized, and the water is forced through a bed depth of filtration media that is sufficient to achieve the desired performance. Once the pressure drop across the bed occurs, or a timed sequence is initiated, a backwash process may be employed to physically remove the oil from the surface of the filtration media and dislodge trapped suspended solids.

US 5401405 A describes a travelling bridge filtration unit including a tank divided into a plurality of adjacent filter cells, a travelling carnage supporting a backwash hood engageable with each of the filter cells and a liquid backwash pump for causing backwash liquid to flow through the cells and for causing backwash air to be drawn into the cell and to flow in the first direction with the backwash liquid.

US 8,747,667 B2 describes a system and method for treating wastewater in a filter media apparatus having a draft tube system positioned in the filter media which may be constructed and arranged to substantially roll the filter media. The filter apparatus may also have a first fluid inlet constructed and arranged to deliver a first fluid to a draft tube system and a filtrate outlet positioned below the filter media.

### SUMMARY

In accordance with the invention a method according to the appended claim 5 for recycling gas in a backwash process is provided. The backwash process comprises removing contaminants from a bed of filtration media in a water treatment device. The method includes generating a mixed liquid-gas stream from the backwash process, withdrawing the mixed liquid-gas stream from the backwash process, separating the mixed liquid-gas stream into a liquid and a gas, and recycling at least a portion of the separated gas to the water treatment device.

The method further includes separating the mixed liquid-gas stream comprises introducing the mixed liquid-gas stream to a separation device, recycling at least a portion of the separated gas comprises pressurizing the separated gas, and pressurizing the separated gas includes feeding the separated gas through at least one of a blower, compressor, and pump.

According to at least one embodiment, the backwash process comprises providing a volume of gas to roll the bed of filtration media. According to a further embodiment, recycling at least a portion of the separated gas comprises providing at least a portion of the volume of gas. According to another embodiment, the method further comprises providing make-up gas to the volume of gas.

In accordance with the invention, a system according to appended claim 1 for recycling gas from a mixed liquid-gas stream is provided. The system comprises a separation device having an inlet in fluid communication with the mixed liquid-gas stream, a liquid outlet, and a gas outlet, the separation device configured to separate the mixed liquid-gas stream into a liquid in fluid communication with the liquid outlet and a gas in fluid communication with the gas outlet, and a water treatment device containing filtration media and configured to generate the mixed liquid-gas stream during a backwash process and having a gas inlet in fluid communication with at least a portion of the separated gas and a mixed liquid-gas stream outlet in fluid communication with the mixed liquid-gas stream. The system further comprises a pressurization device in fluid communication with the gas and configured to pressurize the gas in fluid communication with the gas inlet of the water treatment device. The bed of filtration media is in fluid communication with at least a portion of the gas during the backwash process. The water treatment device further comprises a draft tube positioned within the filtration media. According to a further embodiment, the draft tube is configured to roll the bed of filtration media.

According to at least one embodiment, the gas outlet of the separation device comprises a nozzle positioned in an upper portion of the separation device.

In accordance with certain embodiments, the gas is at least one of nitrogen and a fuel gas. In accordance with other embodiments, the gas is air.

According to certain embodiments, the gas inlet is in further fluid communication with a source of make-up gas.

According to various embodiments, the water treatment device is at least one of a filter device and a coalescer.

Still other aspects, embodiments, and advantages of these example aspects and embodiments, are discussed in detail below. Moreover, it is to be understood that both the foregoing information and the following detailed description are merely illustrative examples of various aspects and embodiments, and are intended to provide an overview or framework for understanding the nature and character of the claimed aspects and embodiments. Embodiments disclosed herein may be combined with other embodiments, and references to "an embodiment," "an example," "some embodiments," "some examples," "an alternate embodiment," "various embodiments," "one embodiment," "at least one embodiment," "this and other embodiments," "certain embodiments," or the like are not necessarily mutually exclusive and are intended to indicate that a particular feature, structure, or characteristic described may be included in at least one embodiment. The appearances of such terms herein are not necessarily all referring to the same embodiment.

### BRIEF DESCRIPTION OF DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 is a schematic of a water treatment process in accordance with one or more aspects of the disclosure;
FIG. 2 is a process flow diagram illustrating a method in accordance with one or more aspects of the disclosure; and
FIG. 3 is a schematic of a water treatment device in accordance with one or more aspects of the disclosure.

### DETAILED DESCRIPTION

The present invention is defined in the appended claims. Aspects of this disclosure are directed to methods and systems for recycling gas in water treatment processes, including backwash processes. The backwash process of the present invention comprises removing contaminants, such as hydrocarbons and suspended solids, from a bed of filtration media in a water treatment device. According to the invention, and as explained further below, during backwash a gas is introduced into a draft tube which causes an air lift pump mechanism and subsequent agitation which agitates and/or mixes the filtration media and dislodges contaminants, which are then flushed out of the system. The backwash process generates a mixed liquid-gas stream. As used herein, the terms "mixed liquid-gas stream" and "liquid-gas mixture" may be used interchangeably and refer to a stream containing a liquid phase and a gas phase. Depending on the application, the ratio between gas and liquid may be between 1.5 and 2 by volume. The mixed liquid-gas stream may be withdrawn from the backwash process and then separated into a liquid and a gas.

Currently, the separated liquid phase is disposed of either by pumping it to an upstream separation step or to a slop tank for disposal, and the separated gas phase, which potentially contains hydrogen sulfide gas and hydrocarbons, is sent to a gas disposal device such as a scrubber or flare. Both of these methods require a significant amount of piping and other infrastructure to be installed for the purposes of transferring the liquids and gases. This presents additional manufacturing and processing costs associated with the water treatment process.

According to one or more embodiments discussed herein, the separated gas may be recycled and used as all or a portion of the volume of gas used to create the airlift pump mechanism during backwash. Thus, the recycled gas may then be recycled back to the water treatment device to be reused over and over again during backwash processing. This not only reduces costs, but also allows more flexibility at sites where a source of gas is not readily available and/or the means for disposing of the gas used in the backwash process is limited or nonexistent. In an embodiment, the gas comprises air. In other embodiments, the gas may comprise nitrogen, one or more hydrocarbons (methane, propane, butane, or the like), or fuel gas (e.g., natural gas or any other combustible hydrocarbon gas, such as one containing hydrocarbon(s), hydrogen, and carbon monoxide, for example).

The aspects disclosed herein in accordance with the present invention are not limited in their application to the details of construction and the arrangement of components set forth in the following description or illustrated in the accompanying drawings.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms. In addition, in the event of inconsistent usages of terms between this document and documents incorporated herein by reference, the term usage in the incorporated reference is supplementary to that of this document; for irreconcilable inconsistencies, the term usage in this document controls. Moreover, titles or subtitles may be used in the specification for the convenience of a reader, which shall have no influence on the scope of the present invention.

As used herein, the term "about" may refer to a value which is ± 5 % of the stated value.

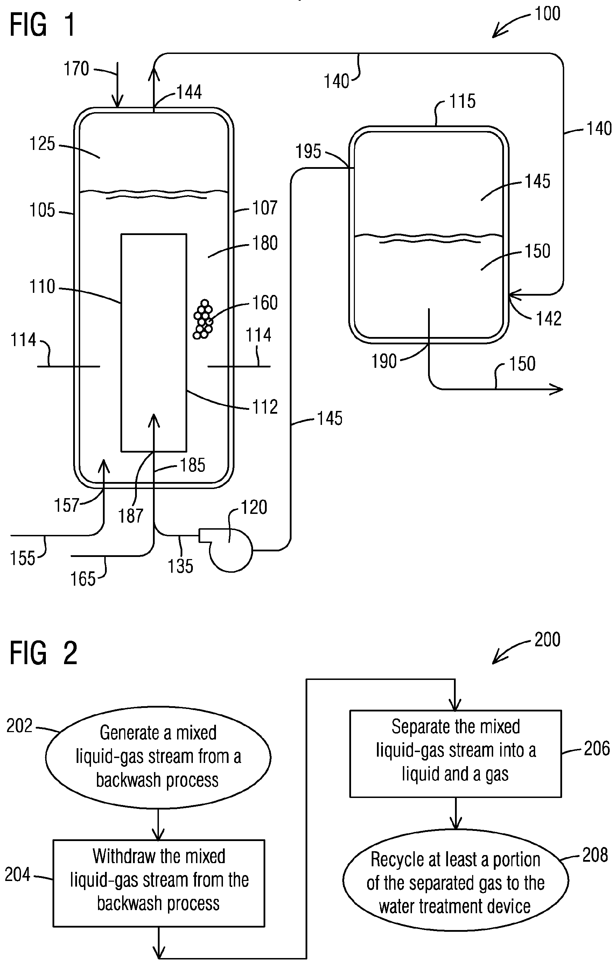

Now referring to the figures, FIG. 1 illustrates a schematic of a process flow diagram of a water treatment system, generally indicated at 100, according to one or more embodiments of the methods and systems described herein. Water treatment system 100 includes a water treatment device 105. As used herein, the term "water treatment device" refers to any device that is configured to conduct one more water treatment processes. According to certain aspects, the water treatment process removes one or more contaminants, such as oil and/or suspended solids from wastewater such as surface water, ground water, and a stream of wastewater from industrial and municipal sources. The water treatment processes disclosed herein may include coalescing, separation, and filtration techniques. One or more of these processes may include passing a feed steam 170 through a bed of filtration media 160 included in the water treatment device 105. According to various embodiments, a backwash process may be conducted that removes one or more contaminants from the bed of filtration media 160 without having to remove the media 160 from the water treatment device 105 and functions to restore the filtration media 160 for re-use.

According to some embodiments, the water treatment device 105 may contain at least one layer 180 of filtration media 160. According to various aspects, the filtration media 160 comprises a composite media. As used herein, the terms "media composite" and "composite media" are used interchangeably and refer to a combination of two or more different materials. In each of the particles or pellets in the plurality of particles or pellets of the filter media, suitable examples of composite media are disclosed in U.S. Patent No, 8,753,524 and U.S. Published Patent Application No. 2014/0291249. In at least one embodiment, the composite media comprises a plurality of particles or pellets, wherein at least some, and in some embodiments all, of the plurality of particles or pellets comprises a mixture of a cellulose-based material and a polymer. In certain embodiments, the composite media (e.g., particles or pellets) may comprise a heterogeneous mixture of a cellulose-based material and a polymer. A heterogeneous mixture comprises the ingredients or constituents such that the components are not distributed uniformly throughout the mixture. As used herein, the term "heterogeneous mixture" also refers to a composite of two or more dissimilar ingredients or constituents.

In other embodiments, the media composite (e.g., particles or pellets) may comprise a homogeneous mixture of a cellulose-based material and a polymer. As used herein, the term "homogeneous mixture" refers to a composite that is a single-phase composite of two or more compounds that are distributed in a uniform ratio or in a substantially uniform ratio throughout the mixture so that any given ones of the particles or pellets, for example, each exhibit the same ratio of the two or more compounds therein. In one embodiment, the media composite may comprise the cellulose-based material and polymer such that the two materials are secured to one another, but are not mixed with one another.

Particles of the composite media may have a slightly uneven or mottled appearance due to the combination (heterogeneous or homogeneous) of two or more components. According to some examples, the two or more different materials of the composite media form a matrix with each other so that the two or more materials are interspersed with one another. For example, the particles of composite media may be porous. The pores are formed during fabrication of the composite media and may be present between elements of the same component and mixtures of elements of two or more different materials. According to at least one embodiment, the particles or pellets may be porous. As used herein, "porosity" refers to the percentage of void space, or air space, of a particle or pellet, and represents the ratio of void area to total surface area.

According to certain aspects, the composite media (e.g., particles or pellets) are prepared by combining and mixing two components, for example, the cellulose-based material and the polymer, at a predetermined ratio and then extruding the material through an extruder. The blended material is then cut into individual particles or pellets, the shape and size of which is discussed further below.

According to least one aspect, the composite media comprises a plurality of uniformly shaped particles. As used herein, the term "uniformly shaped particles" refers to exactly the same shaped and size particles, and substantially the same shaped and sized particle while tolerating some degree of difference in shape attributable to, for example, manufacturing error. Suitable shapes for the particles of the composite media may include spheres and cylinders. For example, the composite media may comprise a plurality of uniformly shaped cylinder or cylinder-like shapes. The composite media may be of any shape that would allow for gaps in the interstitial area between the particles, and may be referred to here as pellets. In certain embodiments, the composite media may comprise a plurality of irregularly shaped particles. According to at least some embodiments, each particle is made up of a homogeneous or a heterogeneous mixture of a cellulose-based material and a polymer.

According to at least one example, the particle of composite media is a pellet. The composite media pellets may have a diameter in a range of from about 2 mm to about 10 mm and a height of from about 1 mm to about 5 mm. For example, the pellet may have a diameter of about 4 mm and a height of about 2 mm. In another example, the pellet may have a diameter of about 4 mm and a height of about 3.5 mm. According to some embodiments, the pellets may be spherical in shape. In accordance with various embodiments each composite media pellet has a size in a range of from about 5 to about 30 mesh. For example, according to at least one embodiment, the composite media has a size in a range of from about 5 to about 10 mesh. According to other embodiments, the composite media has a size in a range of from about 8 to about 30 mesh.

As used herein, the term "cellulose-based material" refers to any material, product, or composition that contains cellulose. Non-limiting examples may include wood from deciduous and evergreen trees, including wood powder, wood pulp, wood particles, wood fibers, sawdust, wood flakes, wood chips, and any other wood product or cellulose-based product suitable for the methods and systems disclosed herein, such as, coconut, bagasse, peat, pulp-mill waste, corn stalks, and any combination thereof. The media may comprise any wood suitable for the purposes of the methods and systems described herein. In certain instances, the cellulose-based material may be pine wood. In other instances, the cellulose-based material may be maple wood. Other non-limiting examples of wood include spruce, cedar, fir, larch, douglas-fir, hemlock, cypress, redwood, yew, oak, ash, elm, aspen, poplar, birch, maple, teak, walnut, balsa, beech, boxwood, Brazilwood, butternut, cherry, basswood, cottonwood, dogwood, hackberry, hickory, mahogany, bamboo, and willow. Further, according to certain aspects, the cellulose-based material may include more than one type of wood. For example, the cellulose-based component may include two or more species of hardwood, non-limiting examples of which include hickory, maple, oak, beech, birch, ash, walnut, cherry, sycamore, poplar, cottonwood, basswood, and aspen.

Non-limiting examples of polymers suitable for the composite media described here may include polyolefins, including high density polyethylene (HDPE), polyethylene (PE), polypropylene (PP), PVC, ethylene propylene copolymers, fluoropolymers, including Teflon®, and any combination thereof. In certain instances, the polymer comprises HDPE. In accordance with other aspects, the polymer may include a polymer foam material. The polymer foam may include one or more portions that are porous or the polymer foam may be entirely porous. Polymer foams may be made by the controlled expansion of gas during the polymerization process. The size and shape of the pores within the polymer foam may be of any size or shape suitable for allowing the composite media to perform the various functions disclosed herein. According to various embodiments, the composite media may comprise a concentration of polymer that is from about 20% to about 80% by weight.

According to certain aspects, the composite media comprises a concentration of cellulose-based material of at least about 30% by weight (wt) of the composite media, but may also be at least about 40%, 45%, and 50% by wt. The concentration of cellulose-based material may be any percentage between about 20% by wt and about 80% by wt of the composite media, or any range of percentages in between these percentages. For example, the composite media comprises a concentration of maple wood of about 50% by weight of the composite media. According to another example, the composite media comprises a concentration of pine wood of about 70% by wt of the composite media. According to yet another example, the concentration of pine wood is about 30% by wt of the composite media.

Specific examples of compositions of composite media that may be used for the systems and methods disclosed herein include (1) 45% by wt HDPE and 55% by wt oak, (2) 70% by wt HDPE and 30% by wt pine, and (3) 70% by wt HDPE and 30% by wt maple wood.

The media composite may also comprise any suitable additional component or components, including chemical components, suitable for the purposes of the methods and systems described herein. Non-limiting examples of further components that may be suitable to include in the media composite include one or more of coagulants and flocculants. According to at least one embodiment, the composite media may further include an additive material that functions to increase the specific gravity of the composite media. Non-limiting examples of suitable additive materials include diatomaceous earth, silica, bentonite, and calcium carbonate. Other similar materials are also within the scope of this disclosure. The additive material may be any inert material suitable for increasing the specific gravity of the composite media so long as the material is not incompatible with the other components of the composite media. For example, additive materials that dissolve the polymer component are unusable.

In accordance with some embodiments, a suitable filtration media 160 for use in the systems and methods disclosed herein includes walnut shell filter media, such as media made from English walnut shells and black walnut shells. For example, black walnut shells and English walnut shells may be used to coalesce and filter wastewater containing oil, as disclosed in U.S. Patent No. 8,747,667 and U.S. Published Patent Application No. 2011/0174746. In accordance with some embodiments, the walnut shell media is comprised of walnut shells having a size in a range of from about 12 to about 20 mesh. According to at least one embodiment, the walnut shells have a size in a range of from about 12 to about 16 mesh.

Other types of types of filtration media may also be used in lieu of or in combination with the walnut shell media. Non-limiting examples include other types of shells from nuts, such as shells from pecans, pine nuts, pistachios, brazil nuts, coconuts, and almonds. Non-limiting examples of other types of filter media may include activated carbon, anthracite, sand, diatomaceous earth, charcoal, and other cellulosic materials, as discussed above.

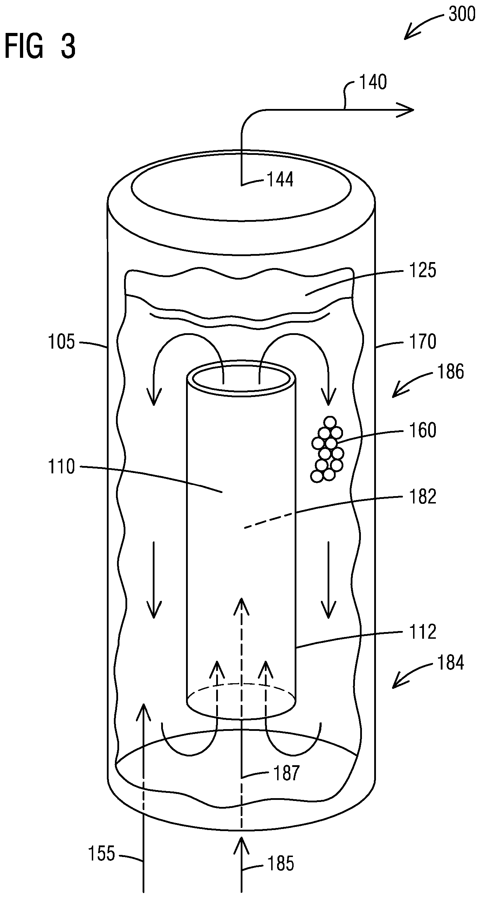

Although FIGS. 1 and 3 indicate a single layer 180 of filtration media, according to some embodiments a water treatment device may be provided with a stratified multi-media bed comprising multiple layers of filtration media where one layer of media is positioned above an underlying layer of media. According to some embodiments, the layers of media may be separated based on density and/or specific gravity. For example, according to certain aspects, a layer of composite media having a specific gravity with a value less than about 1.1 may be positioned over a layer of walnut shell media, which has a specific gravity of greater than about 1.2. Thus, in instances where the composite media is used with walnut shells, the composite media may have a specific gravity that is lower than that of the walnut shells, and may have also have a lower density than the walnut shells. During backwash, composite media pellets, which may be sized at 5-30 mesh, and have a specific gravity and density that is lower than walnut shells, may segregate and settle in the upper portion of the water treatment device due to their lower specific gravity and/or density physical properties.

According to various aspects and referring to FIG. 1, there is shown a system 100 according to the present invention comprising a water treatment device 105. The water treatment device 105 comprises a vessel 107 sized and shaped according to a desired water treatment process that includes backwash processing techniques. The water treatment device 105 may be designed to be positioned in either a horizontal or vertical position. When positioned in a vertical direction, the vessel 107 may contain varying media depths, from 48 to 66 inches and from 2 to 14 feet in diameter, depending on the flowrate of the wastewater to be treated. The water treatment device 105 may be open to the environment or may be closed to operate under pressure. In certain applications, the water treatment device 105 may be constructed to provide an anaerobic or aerobic environment. As mentioned above, the water treatment device 105 has a bed to accommodate filtration media 160 at a desired depth based upon the desired volume of feed to be treated with the filtration media 160 selected for the particular application. Accordingly, the water treatment device 105 may have any bed depth of filtration media 160 that is suitable for the purposes of the water treatment processes described herein.

The water treatment device 105 may be constructed of any material suitable for the purposes of the methods and systems described herein. Non-limiting examples of suitable materials include steel, stainless steel, fiberglass reinforced plastic, and polyvinyl chloride (PVC). One or more embodiments may include a water treatment device having one or more sidewalls depending upon the desired shape of the water treatment device. For example, a cylindrical water treatment device may have one sidewall, while a square or rectangular water treatment device may have four side walls. In certain embodiments, the water treatment device may have a cylindrical shape having one continuous sidewall positioned between the first and second walls. In certain other embodiments, the water treatment device may be closed wherein one or more sidewalls extend between a first wall and a second wall. The water treatment device 105 contains filtration media 160. As discussed further below, any media suitable for the methods and systems disclosed herein may be used. The filtration media 160 may be positioned in the water treatment device 105 at a preselected depth and may fill the entire volume of the water treatment device 105 or may be contained in a particular portion of the water treatment device. For example, a portion of the volume of the water treatment device adjacent one or more walls may be free of media. Filtration media 160 may be contained within the water treatment device 105 by one or more dividers, such as screens or perforated plates, which may retain the media in a desired location within the water treatment device 105 while allowing one or more liquids to flow throughout the media in the device.

During feed-forward water treatment processes, feed stream 170 is introduced to water treatment device 105. The feed stream 170 may comprise one or more components. In certain instances, the feed stream 170 may comprise one or more components that are in the same phase, for example, one or more liquids. In other instances, the feed stream 170 may comprise one or more components that are in different phases, for example, one or more gas and liquid combinations, and one or more solid and liquid combinations. In certain applications, the feed stream 170 may comprise one or more suspended solids, colloids and particulate matter. According to various aspects, the feed stream 170 may comprise an aqueous-based liquid. In certain aspects, the feed stream 170 may comprise a hydrocarbon liquid (also referred to herein as hydrocarbons) and an aqueous-based liquid. The feed stream 170 may further include suspended solids. In certain aspects, the system may receive one or more feed streams from industrial sources, such as oil refineries, oil wells, petrochemical plants, chemical plants, natural gas processing plants, and other industrial processes.

In accordance with certain aspects, during water treatment processes, the water treatment system 100 may receive a feed stream 170 comprising hydrocarbons and an aqueous-based liquid, and in certain instances the feed stream 170 may also include suspended solids. As used herein, the term "hydrocarbon" refers to organic material with molecular structures containing carbon bonded to hydrogen. Hydrocarbons may also include other elements, such as, but not limited to, at least one of halogens, metallic elements, nitrogen, oxygen, and sulfur. As used herein, the term "hydrocarbon liquid" or simply "hydrocarbons" refers to a liquid phase hydrocarbon fluid or to a mixture of liquid phase hydrocarbon fluids. The hydrocarbon liquid may comprise additional substances, for example, solid particles. Non-limiting examples of hydrocarbon liquids may include, for example, crude oil, natural gas, shale oil, pyrolysis oil, and any combination thereof.

As used herein, the terms "aqueous-based liquid," and "aqueous stream" refer to liquids comprising water. The liquid may comprise additional substances, which may be solids, including suspended solids, liquids, gases, or any combination thereof. Thus, the feed stream 170 may comprise one or more components that are in different phases, for example, one or more gas and liquid combinations, and one or more solid and liquid combinations, although in certain aspects, the feed stream may comprises components that are in the same phase.

In accordance with one or more embodiments, the water treatment device 105 may comprise at least one of a filter device and a coalescer. According to at least one aspect, the filter device and the coalescer include filtration media 160. Filtration media 160 is represented in FIGS. 1 and 3 as uniform spherical particles, however, it is to be understood that the filtration media may be comprised of any particle size and shape, including irregularly shaped particles. Further, the filtration media in the figures is represented as only filling a portion of the designated layer, such as layer 180, but it is understood that the filtration media may comprise the entire layer.

In at least one embodiment, contacting the feed stream 170 with the filtration media 160 includes filtering the feed stream. As used herein, the term "filtering" refers to any process used to separate a constituent of a substance from other constituents of the substance. For example, filtering may refer to a process for separating one or more phases from each other. In certain aspects, filtering may separate two liquid phases. In other aspects, filtering may separate a solid from a liquid phase. In at least one embodiment, filtering refers to a process for separating a hydrocarbon liquid from an aqueous-based liquid. In certain aspects, filtering comprises passing a feed stream through a filter device at a flux rate that may be less than about 40 gpm/ft². According to other aspects, filtering comprises passing a feed stream through a filter device at a flux rate that may be less than about 20 gpm/ft².

As used herein, the term "filter device" refers to any device suitable for performing filtering processes. In certain embodiments, the filter device may be constructed from any suitable construction material, for example, steel, stainless steel, fiberglass reinforced plastic, and PVC material, to form a tube or column structure. According to various aspects, the filter device includes filtration media and a screen material fitted on at least one end of the filter device for purposes of retaining the media. In certain aspects, the direction of fluid flow through the filter device during filtration processes may be from top-to-bottom, although alternative filtration processes may include fluid flow through the filter device from bottom-to-top.

In other aspects, contacting the feed stream 170 with the filtration media 160 comprises coalescing the feed stream. As used herein, the term "coalescing" refers to the combining and/or uniting of one or more smaller droplets of a liquid or other phase to form at least one of a larger droplet, a phase, and a layer. For example, in certain aspects, coalescing may increase the droplet size of a hydrocarbon liquid from a diameter of less than about 20 microns to a size that is greater than about 20 microns. In certain other aspects, coalescing may increase the droplet size of a hydrocarbon liquid from a diameter of less than about 20 microns to a size that is greater than about 50 microns. In some aspects, coalescing may produce a droplet size of a hydrocarbon liquid that is greater than about 50 microns. In some aspects, coalescing may produce a droplet size of a hydrocarbon liquid that may be greater than about 100 microns. According to some aspects, a coalesced stream may refer to a liquid where the droplets of a liquid or other phase form a droplet of at least about 20 microns in diameter. In at least one aspect, coalescing comprises passing a feed stream through a coalescer at a flux rate that may be in a range of from about 40 to about 250 gpm/ft². In another aspect, coalescing comprises passing a feed stream through a coalescer at a flux rate that may be in a range of from about 100 to about 200 gpm/ft².

As used herein, the term "coalescer" refers to any device suitable for performing coalescing processes. In certain aspects, the coalescer may be constructed and arranged as discussed above in reference to the vessel. The coalescer may be constructed of any material suitable for the particular purposes of the methods and systems described herein. In certain embodiments, the coalescer may be constructed, for example, from any one or more of steel, stainless steel, fiberglass reinforced plastic, and PVC material, to form a tube or column structure. In at least one aspect, the coalescer may include filtration media and a screen for purposes of retaining the filtration media. The direction of fluid flow through the coalescer may be from top-to-bottom, although fluid flow through the coalescer from bottom-to-top is also within the scope of this disclosure. According to the invention the water treatment device 105 is fitted with a draft tube system 110 as shown in FIG. 1. The draft tube system 110 comprises one or more draft tubes 112 and may be constructed and arranged to intermittently backwash the media by providing a desired volume and/or velocity of backwash fluid to roll the bed. For example, the backwash process may comprise providing a volume of gas to roll the bed of filtration media 160, as discussed below. Alternatively, or in addition, the draft tube system 110 may be used during at least one of the filtering and coalescing processes. According to the invention backwashing is performed with a draft tube system in place, or in embodiments not forming part of the present invention it may be performed without a draft tube system. As used herein, "rolling the bed" is defined as the movement of the media during backwash in which the media at or near the bottom of the vessel may be partially or completely moved through the draft tube system 110 toward the top of the water treatment device 105 and back toward the bottom of the water treatment device 105. The draft tube system 110 may be sized and shaped to provide for at least one of a desired volume of media to be backwashed and to operate within a preselected time period for backwash operation. The draft tube system 110 comprises one or more draft tubes 112 positioned in the media. As used herein, a "draft tube" is a structure having one or more sidewalls open at both ends which, when positioned in the media, provides a passageway for flow of media during backwash.

The draft tube 112 of the draft tube system 110 may be constructed of any material suitable for the particular purposes of the methods and systems described herein. For example, the draft tube 112 may be formed of the same material as the water treatment device 105 or may be formed of lighter, heavier, more expensive, or less expensive materials. For example, the draft tube 112 may be formed of plastics, including fiberglass reinforced plastics. The draft tube 112 may be preformed for insertion into the water treatment device 105 or manufactured as part of the water treatment device 105. As such, the draft tube 112 may be designed to retrofit current water treatment devices. According to certain aspects, the draft tube 112 may be supported on the exterior wall of the water treatment device. Alternatively, the draft tube 112 may be supported on a divider or media retention plate, such as a screen or perforated plate, designed to retain the filtration media 160 within a region of the water treatment device 105 while allowing the flow of liquid and contaminants into and out of the filtration media 160.

An individual draft tube 112 may be sized and shaped according to at least one of a desired application, a volume of media 160 to be backwashed, and to operate within a preselected time period for backwash operation. The draft tube 112 may also be sized and shaped to provide suitable movement or lifting of the filter media during filtering or coalescing. The draft tube 112 may also be sized and shaped to provide a desired level of agitation within the draft tube 112 to partially or completely scrub the filtration media 160, thereby releasing at least one of a portion of the contaminants, such as hydrocarbons and suspended solids, from the filtration media 160.

The desired draft tube system volume may be provided by a single draft tube or by providing multiple draft tubes having a total volume substantially equal to the desired volume. An individual draft tube may have a cross sectional area of any shape, such as circular, elliptical, square, rectangle, or any irregular shape. The individual draft tube may have any overall shape, such as conical, rectangular and cylindrical. In one embodiment, the draft tube 112 is a cylinder. The draft tube 112 may be positioned in the filtration media 160 so as to be entirely enveloped by the filter media as well as to be entirely filled with the filter media. One or both ends of the draft tube 112 may be constructed and arranged to assist with at least one of the flow of media into and out of the draft tube 112. For example, the side wall at a first end of the draft tube 112 may include one or more cutouts forming passageways to allow some of the filter media at or near the first end of the draft tube to enter through the sidewall of the draft tube, as discussed in U.S. Patent No. 8,747,667 and U.S. Published Patent Application No. 2011/0174746. The cutouts forming the passageways may have any shape to allow a sufficient volume of filter media to enter the draft tube. For example, cutouts may be triangular, square, semicircular, or have an irregular shape. Multiple passageways may be identical to one another and may be uniformly positioned about the first end of the draft tube to equally distribute flow of filter media in the draft tube. The draft tube 112 may also be open at the bottom, and may or may not contain additional cutouts.

The draft tube or draft tubes 112 may be positioned at any suitable location within the filtration media 160. For example, a single draft tube 112 may, but need not, be positioned centrally in relation to the water treatment device sidewalls. Similarly, multiple draft tubes 112 in a single water treatment device 105 may be randomly positioned or positioned in a uniform pattern in relation to the water treatment device sidewalls. In certain instances, a single draft tube 112 is positioned in the filter media 160 in relation to the water treatment device 105 so that an axis extending from each end of the draft tube 112 is co-axial with an axis parallel to the sidewall of the vessel. Multiple draft tubes 112 in a single water treatment device 105 may, but need not, be identical in volume or cross sectional area. For example, a single water treatment device 105 may comprise cylindrical, conical and rectangular draft tubes 112 of varying height and cross sectional area. For example, a water treatment device may have a first draft tube centrally positioned having a first cross sectional area and a plurality of second draft tubes positioned adjacent the side wall of the water treatment device in which each of the second draft tubes has a second cross sectional area smaller than the first cross sectional area. According to another example, a water treatment device has a plurality of identical draft tubes.

According to various aspects, the draft tube 112 may include a baffle to prevent or reduce backflow within the draft tube 112. The baffle may have any size and shape suitable for a particular draft tube. For example the baffle may be a plate suitably positioned on an inner surface of the draft tube or a cylinder positioned in the draft tube. In one embodiment, the baffle may be a solid or hollow cylinder centrally positioned within the draft tube.

FIGS. 1 and 3 illustrate a backwash process in accordance with various aspects of this disclosure. Upon initiating a backwash process, flow of the feed stream 170 through the water treatment device 105 is interrupted. A flow of gas 185 may be initiated through a gas inlet 187 at a bottom of the water treatment device 105 and flow of backwash fluid 155 may be initiated through a backwash fluid inlet 157. According to some embodiments, the backwash fluid inlet 155 may also comprise an outlet for the treated stream created during the filtration or coalescing processes performed by the water treatment system 105, which may eliminate the need for a separate inlet for the backwash fluid 155. Flow of the gas 185 through the gas inlet 187 may, but need not, occur before flow of the backwash fluid 155 is initiated. For example, flow of the gas 185 and the backwash fluid 155 may begin simultaneously, while according to other examples, the flow of the backwash fluid 155 may begin before flow of the gas 185 is initiated. Further, the gas 185 and the backwash fluid 155 may continuously flow during backwashing. Alternatively, the flow of one or both of the gas 185 and the backwash fluid 155 may be intermittent. Other variations and details regarding a pulsed backwash system are described in U.S. Patent No. 8,747,667 and U.S. Published Patent Application No. 2011/0174746.

Upon introduction of the gas 185 and the backwash fluid 155, the bed of filtration media 160 expands and moves counter to the direction of the feed stream 170 within the water treatment device 105, as shown in FIGS. 1 and 3. As indicated in FIG. 3, the filtration media 160 moves from the top end of the vessel 107 along the outside of the draft tube 112 to the bottom end of the vessel 107 where it may then enter the bottom end of the draft tube system 110 adjacent the bottom end of the vessel 107. The filtration media 160 then moves within the interior region 182 of the draft tube system 110 from the bottom end 184 of the draft tube system 110 to the top end 186 of the draft tube system 110 (in a direction counter to the flow of the feed stream 170 during filtration) where it exits the draft tube 112 and enters one or more peripheral zones 114 of the water treatment device 105, thereby partially or completely rolling the bed. While flowing in the draft tube system 110, the filtration media 160 may mix, thereby releasing a portion of the oil and suspended solids previously immobilized on the filtration media 160.

During backwash, upon exiting the draft tube system 160 and entering the peripheral zones 114, filtration media 160 enters a turbulent scrub zone 125 located above the draft tube 112 in which the filter media continues to mix, releasing additional oil and suspended solids. The oil and suspended solids released from the filtration media 160 may be drawn from the water treatment device 105 along with the gas 185 and backwash liquid 155 used during the backwash process as a mixed liquid-gas stream 140. The mixed liquid-gas stream 140 may be directed from the water treatment device 105 to a separation device 115 as shown in FIG. 1.

Referring back to FIG. 1, the flow of gas 185 used during backwash may be in communication with a source of the gas 185 or any other fluid that may be used to induce movement of the filtration media 160 through the draft tube system 110. For example, in certain applications the gas 185 may be air or oxygen, and in other applications the gas may be nitrogen, a produced gas, and/or a fuel gas. The type of gas 185 used in the backwash process may depend on the type of processing being performed. For example, for upstream oil and gas processing, the gas 185 may be nitrogen or a fuel gas, since oxygen creates issues related to corrosion. As used herein, fuel gas 185 may include natural gas or any other combustible hydrocarbon gas. In contrast, for downstream oil and gas processing, air or oxygen may be used.

According to certain aspects, the gas 185 may be introduced within the draft tube 112 through one or more draft tube inlets positioned within the draft tube 112, which may also include a diffuser. According to other aspects, the gas inlet 187 may be positioned below the draft tube 112. The gas inlet 187 may comprise one or more inlets positioned within the water treatment device 105 that function to deliver gas 185 to the draft tube system 105 for the purposes of imparting flow to the filtration media 160 through the draft tube system 110. For example, the gas inlet 187 may be an orifice, a nozzle, or a jet for delivering gas. According to some embodiments, the gas inlet 187 may also deliver liquid or a combination of gas and a liquid to the draft tube system 110.

The water treatment device 105 may also include one or more inlets for a flow of backwash fluid 155 to the water treatment device 105. For example, backwash fluid 155 may be delivered to peripheral zones 114 located between the sidewall of the draft tube system 110 and respective sidewalls of the water treatment device 105. Although FIG. 1 only shows backwash fluid 155 being delivered to one location of the water treatment device 105, the backwash fluid 155 may be delivered to one or more locations, including the other side of the water treatment device 105 in a similar location as what is already shown in FIG. 1. As used herein, a "peripheral zone" is an internal volume of the vessel not occupied by the draft tube system. The backwash fluid 155 may be delivered at or near the bottom wall of the water treatment device 105 to induce flow or assist in the flow of filtration media 160 toward the bottom end of the draft tube system 110. One or more backwash fluid inlets 157 may be positioned within the water treatment device 105 to provide backwash flow to the water treatment device 105 and direct filtration media 160 toward the draft tube system 110.

The backwash fluid 155 may be a liquid, such as the filtrate or wastewater to be filtered, a gas, such as air, and combinations thereof. According to some embodiments, the backwash fluid 155 comprises at least a portion of the feed stream 170 diverted from a feed stream inlet, a treated stream, or any other source of fluid suitable for the backwash process. The inlet 157 that provides the backwash fluid 155 may have any configuration suitable for delivering the backwash fluid 155 to the water treatment device 105, including the peripheral zone 114. For example, the inlet 157 for the backwash fluid 155 may be an orifice, a nozzle, or a jet for delivering a gas, liquid or combination thereof. In certain instances, the inlet 157 for the backwash fluid may extend from any suitable location to assist in water distribution.

According to various aspects, the backwash process may further include fluidizing the layer 180 of filtration media 160. According to some embodiments, adequate fluidization occurs during the backwash process itself, when the gas 185 and/or backwash fluid 155 are introduced into the water treatment device 105. According to other embodiments, fluidization is a separate step at the end of the backwash process. For example, backwash liquid 155 may be introduced to produce an upflow velocity of fluid into the filtration media 160, which may function to release additional contaminants from the filtration media 160. In instances where a stratified media bed is used, this technique may also allow larger and less dense particles to segregate to the upper portion of the water treatment device 105 and smaller and more dense particles to fall to the lower portion of the water treatment device 105.

According to the present invention, the backwash process generates a mixed liquid-gas stream 140. For instance, the influx of gas 185 and backwash fluid 155 into the water treatment device 105 and the filtration media 160 may cause fluid flow patterns that mix the gas 185 and backwash fluid 155 with one another. During the backwash cycle, hydrocarbons and other contaminants are released and mix with the gas 185 and backwash fluid 155 to form mixed liquid-gas stream 140. The mixed liquid-gas stream 140 is withdrawn from the water treatment device 105, such as through an outlet 144 at or near the top of the water treatment device 105, and then introduced into an inlet 142 of a separation device 115 which functions to separate the mixed liquid-gas stream 140 into a liquid 150 and a gas 145.

As used herein, the term "separation device" refers to a device that utilizes any separation technique for separating a liquid from a gas. In accordance with various aspects, the separation tank 115 may be used specifically for the purposes of separating the gas from the liquid, or it could be a tank or device that already exists in the water treatment system 105 for another purpose, such as for receiving a backwash waste stream. According to some embodiments, gravity may be used to separate the liquid from the gas. For instance, liquid, which is more dense than gas, will naturally accumulate at or near the bottom of the separation device 115 and form a liquid 150, while the gas naturally rises to the top of the separation device 115 to form a gas 145. Although the inlet of the mixed liquid-gas stream 140 to the separation device 115 is indicated to be near the bottom of the separation device 115, entry of the mixed liquid-gas stream 140 may also be in an upper portion of the separation device 115. As will be appreciated, other types of separation devices besides gravity-based devices are also within the scope of this disclosure, including cyclonic devices.

Referring to FIG. 1, the separation vessel 115 also includes a liquid outlet 190 and a gas outlet 195. As discussed above, the separation device 115 is configured to separate the mixed liquid-gas stream 140 into a liquid 150 that is in fluid communication with the liquid outlet 190 and a gas 145 that is in communication with the gas outlet 195. The gas 145 of the separation device 115 contains at least a portion of the gas used during the backwash process and may contain contaminants that are in gas form. In accordance with some embodiments, the gas outlet 195 of the separation device 115 is a nozzle positioned in an upper portion of the separation device 115. The liquid 150 of the separation device contains at least a portion of the backwash fluid 155 used in the backwash process, as well as at least a portion of the contaminants released from the filtration media 160 during backwash. According to some embodiments, liquid 150 may be further processed to remove an amount of oil or hydrocarbons therefrom.

As shown in FIG. 1, upon exiting the separation device 115, the gas 145, which also may be referred to as recycled gas 135, is pressurized using a pressurization device 120. As used herein, the term "pressurization device" refers to any device that generates a pressurized stream of gas or liquid suitable for use in a backwash process. The pressurization device 120 may also function to "pull" the separated gas 145 from the separation device 115. According to a further aspect, the pressurization device 120 may also function to "push" the mixed liquid-gas stream 140 out of the water treatment device 105. The pressurization device 120 is at least one of a blower, compressor, and pump. The gas 145 may be pressurized to different values depending on the application. According to various embodiments, the gas may be pressured to at least 20 psig.

In accordance with certain embodiments, the pressurization device 120 may include or otherwise be in communication with a dissolved gas flotation (DGF) unit that delivers bubbled gas to the water treatment device 105, including the draft tube system 110. Non-limiting examples of such systems include the Brise™ DGF pump system available from Siemens. These systems are configured to shear water vapor into bubbles sized at one micron or larger by educting gas and water into an impeller, which is then subjected to a drop in pressure. According to another embodiment, the pressurization device 120 may include or otherwise be in communication with an eductor that is configured to disseminate gas bubbles. According to certain aspects, the eductor may be positioned within the water treatment device 105, such as below the draft tube system 110, so that gas bubbles are generated within the water treatment device 105. According to other aspects, the eductor may be positioned external to the water treatment device 105 such that gas bubbles are introduced to the water treatment device 105, including the draft tube system 110.

In accordance with one or more embodiments, a make-up gas 165 may be introduced in combination with the recycled gas 135 into the water treatment device 105 as part of the gas 185 used in the backwash process. In certain instances, a portion of the volume of gas used in the backwash process may become dissolved in the backwash liquid 155 or may otherwise be "lost" in the system. Thus, in certain embodiments, the recycled gas 135 may not fully provide the requisite volume of gas necessary to roll the bed of filtration media 160 during the backwash process. Thus, a source of make-up gas 165 from a "fresh" source may be used to provide an adequate volume of gas to conduct the backwash process. As mentioned above, for upstream oil and gas industrial processes the make-up gas 165 may include nitrogen or fuel gas, and for downstream processes, the make-up gas may be air.

FIG. 2 is a process flow diagram illustrating at least one process, generally indicated at 200, that is in accordance with one or more aspects of the disclosure. The process of the present invention is defined in the appended claim 5.

In FIG. 2, step 202 includes generating a mixed liquid-gas stream from a backwash process. For example, a water treatment device 105 as described above may contain filtration media 160 that is used for filtering wastewater and a backwash process may thus be used to clean the contaminated media. This generates a mixed liquid-gas stream that is then withdrawn from the backwash process at step 204. For example, the mixed liquid-gas stream may exit the water treatment device 105 through pressurization, where it is then transported to a separation device, as described above. At step 206 the mixed liquid-gas stream is separated into a liquid and a gas, and at least a portion of the separated gas is recycled to the water treatment device at step 208, where it may be reused for subsequent backwash processes.

Processes 202-208 each depict one particular sequence of acts in a particular embodiment. The acts included in these processes may be optional and, as such, may be omitted in accordance with one or more embodiments. Additionally, the order of acts can be altered, or other acts can be added, without departing from the scope of the embodiments described herein.

Having thus described several aspects of at least one example, it is to be appreciated that various alterations, modifications, and improvements will readily occur to those skilled in the art. For instance, examples disclosed herein may also be used in other contexts. Such alterations, modifications, and improvements are intended to be part of this disclosure, and are intended to be within the scope of the examples discussed herein. Accordingly, the foregoing description and drawings are by way of example only.

## Claims

1. A system (100) for recycling gas from a mixed liquid-gas stream (140) comprising:
a separation device (115) having an inlet (142) in fluid communication with the mixed liquid-gas stream (140), a liquid outlet (190), and a gas outlet (195), the separation device (115) configured to separate the mixed liquid-gas stream (140) into a liquid (150) in fluid communication with the liquid outlet (190) and a separated gas (145) in fluid communication with the gas outlet (195); and
a water treatment device (105) comprising a vessel (107) containing a bed of filtration media (160) and a draft tube system (110) that comprises one or more draft tubes (112) for introducing gas through one or more draft tube inlets positioned within the draft tube (112) and configured to generate the mixed liquid-gas stream (140) during a backwash process, the water treatment device (105) further having a gas inlet (187) in fluid communication with at least a portion of the separated gas (145) and a mixed liquid-gas stream outlet (144) in fluid communication with the mixed liquid-gas stream (140),
a pressurization device (120) in fluid communication with the separated gas (145) and configured to pressurize the separated gas (145) in fluid communication with the gas inlet (187) of the water treatment device (105).

2. The system (100) of claim 1, wherein the draft tube (112) is positioned within the filtration media (160).

3. The system of claim 1, wherein the gas inlet (187) is in further fluid communication with a source of make-up gas (165).

4. The system of claim 1, wherein the water treatment device (105) comprises at least one of a filter device and a coalescer.

5. A method for recycling gas in a backwash process, in particular method of using a system of claim 1, the backwash process comprising removing contaminants from a bed of filtration media (160) in a water treatment device (105), wherein the water treatment device (105) comprising a vessel (107) containing a bed of filtration media (160) and a draft tube system (110) for introducing gas that comprises one or more draft tubes (112) for introducing gas and configured to generate the mixed liquid-gas stream (140) during a backwash process, the water treatment device (105) further having a gas inlet (187) in fluid communication with at least a portion of the separated gas (145) and a mixed liquid-gas stream outlet (144) in fluid communication with the mixed liquid-gas stream (140), wherein the method comprises:
backwashing the bed of filtration media (160) by directing a gas (185) and a backwash fluid (155) through the bed of filtration media (160);
generating (202) a mixed liquid-gas stream (140) from the backwashing of the bed of filtration media (160);
withdrawing (204) the mixed liquid-gas stream (140) from the backwashing of the bed of filtration media (160);
separating the mixed liquid-gas stream (140) into a liquid (150) and a gas (145),
wherein separating the mixed liquid-gas stream (140) comprises introducing the mixed liquid-gas stream (140) to a separation device (115),
the separation device (115) having an inlet (142) in fluid communication with the mixed liquid-gas stream (140), a liquid outlet (190), and a gas outlet (195), the separation device (115) configured to separate the mixed liquid-gas stream (140) into a liquid (150) in fluid communication with the liquid outlet (190) and a separated gas (145) in fluid communication with the gas outlet (195); and
recycling and using at least a portion of the volume of the separated gas (145);
pressurizing the portion of the volume of the separated gas (145) in a pressurization device (120),
the pressurization device (120) in fluid communication with the separated gas (145) and configured to pressurize the separated gas (145) in fluid communication with the gas inlet (187) of the water treatment device (105),
wherein pressurizing the separated gas (145) includes feeding the separated gas (145) through the pressurization device (120), the pressurization device being at least one of a blower, compressor, and pump,
using the pressurized portion of the volume of the separated gas (145) to create an air lift pump mechanisms during backwash by introducing the separated gas (145) within the draft tube(s) (112) through one or more draft tube inlets positioned within the draft tube(s) (112).

6. The method of claim 5, wherein the backwashing comprises providing a volume of gas (185) to roll the bed of filtration media (160).

7. The method of claim 5, wherein the separated gas (145) provides all of the volume of gas (185) for the backwashing step.

8. The method of claim 5, wherein the separated gas (145) comprises a member selected from the group consisting of nitrogen and a fuel gas.

9. The method of claim 5, wherein the separated gas (145) comprises air.

## Patentansprüche

1. System (100) zum Recycling von Gas aus einem vermischten Flüssigkeits-Gasstrom (140), Folgendes umfassend:
eine Abtrennungsvorrichtung (115) mit einem Einlass (142) in Fluidverbindung mit dem vermischten Flüssigkeits-Gasstrom (140), einem Flüssigkeitsauslass (190) und einem Gasauslass (195), wobei die Abtrennungsvorrichtung (115) eingerichtet ist, um den vermischten Flüssigkeits-Gasstrom (140) in eine Flüssigkeit (150) in Fluidverbindung mit dem Flüssigkeitsauslass (190) und in ein abgetrenntes Gas (145) in Fluidverbindung mit dem Gasauslass (195) zu trennen; und
eine Wasserbehandlungsvorrichtung (105), einen Behälter (107), der ein Bett mit Filtermedien (160) enthält, und ein Leitrohrsystem (110) umfassend, das ein oder mehrere Leitrohre (112) zum Einführen von Gas durch einen oder mehrere Leitrohreinlässe umfasst, die innerhalb des Leitrohres (112) positioniert sind, und eingerichtet ist, um den vermischten Flüssigkeits-Gasstrom (140) während eines Rückspülprozesses zu erzeugen, wobei die Wasserbehandlungsvorrichtung (105) weiterhin einen Gaseinlass (187) in Fluidverbindung mit mindestens einem Anteil des abgetrennten Gases (145) und einen vermischten Flüssigkeits-Gasstromauslass (144) in Fluidverbindung mit dem vermischten Flüssigkeits-Gasstrom (140) aufweist,
eine Kompressionsvorrichtung (120) in Fluidverbindung mit dem abgetrennten Gas (145), und die eingerichtet ist, das abgetrennte Gas (145) in Fluidverbindung mit dem Gaseinlass (187) der Wasserbehandlungsvorrichtung (105) unter Druck zu setzen.

2. System (100) nach Anspruch 1, wobei das Leitrohr (112) innerhalb der Filtermedien (160) positioniert ist.

3. System nach Anspruch 1, wobei der Gaseinlass (187) weiterhin in Fluidverbindung mit einer Quelle von Spülgas (165) ist.

4. System nach Anspruch 1, wobei die Wasserbehandlungsvorrichtung (105) mindestens eine Filtervorrichtung oder einen Flüssigkeitsabscheider umfasst.

5. Verfahren zum Recycling von Gas in einem Rückspülprozess, wobei das Verfahren insbesondere ein System nach Anspruch 1 verwendet, wobei der Rückspülprozess Entfernen von Verunreinigungen aus einem Bett von Filtermedien (160) in einer Wasserbehandlungsvorrichtung (105) umfasst, wobei die Wasserbehandlungsvorrichtung (105), einen Behälter (107), der ein Bett mit Filtermedien (160) enthält, und ein Leitrohrsystem (110) zum Einführen von Gas umfasst, das ein oder mehrere Leitrohre (112) zum Einführen von Gas umfasst und eingerichtet ist, um den vermischten Flüssigkeits-Gasstrom (140) während eines Rückspülprozesses zu erzeugen, wobei die Wasserbehandlungsvorrichtung (105) weiterhin einen Gaseinlass (187) in Fluidverbindung mit mindestens einem Anteil des abgetrennten Gases (145) und einen vermischten Flüssigkeits-Gasstromauslass (144) in Fluidverbindung mit dem vermischten Flüssigkeits-Gasstrom (140) aufweist,
wobei das Verfahren Folgendes umfasst:
Rückspülen des Betts von Filtermedien (160) durch Leiten eines Gases (185) und eines Rückspülfluids (155) durch das Bett von Filtermedien (160);
Erzeugen (202) eines vermischten Flüssigkeits-Gasstroms (140) aus dem Rückspülen des Betts von Filtermedien (160);
Rückspülen (204) des vermischten Flüssigkeits-Gasstroms (140) aus dem Rückspülen des Betts von Filtermedien (160);
Trennen des vermischten Flüssigkeits-Gasstroms (140) in eine Flüssigkeit (150) und in ein Gas (145),
wobei Trennen des vermischten Flüssigkeits-Gasstroms (140) Einführen des vermischten Flüssigkeits-Gasstroms (140) in eine Abtrennungsvorrichtung (115) umfasst, wobei die Abtrennungsvorrichtung (115) einen Einlass (142) in Fluidverbindung mit dem vermischten Flüssigkeits-Gasstrom (140), einen Flüssigkeitsauslass (190) und einen Gasauslass (195) aufweist,
wobei die Abtrennungsvorrichtung (115) eingerichtet ist, um den vermischten Flüssigkeits-Gasstrom (140) in eine Flüssigkeit (150) in Fluidverbindung mit dem Flüssigkeitsauslass (190) und in ein abgetrenntes Gas (145) in Fluidverbindung mit dem Gasauslass (195) zu trennen; und
Recycling und Verwenden mindestens eines Anteils des Volumens des abgetrennten Gases (145);
Komprimieren des Anteils des Volumens des abgetrennten Gases (145) in einer Kompressionsvorrichtung (120),
wobei die Kompressionsvorrichtung (120) in Fluidverbindung mit dem abgetrennten Gas (145) ist und eingerichtet ist, das abgetrennte Gas (145) in Fluidverbindung mit dem Gaseinlass (187) der Wasserbehandlungsvorrichtung (105) unter Druck zu setzen,
wobei Komprimieren des abgetrennten Gases (145) Einspeisen des abgetrennten Gases (145) durch die Kompressionsvorrichtung (120) umfasst, wobei die Kompressionsvorrichtung mindestens ein Gebläse, einen Verdichter oder eine Pumpe umfasst,
Verwenden des unter Druck stehenden Anteils des Volumens des abgetrennten Gases (145), um einen Drucklufthebermechanismus während eines Rückspülens durch Einführen des abgetrennten Gases (145) innerhalb des(der) Leitrohrs(Leitrohre) (112) durch einen oder mehrere Leitrohreinlässe zu erzeugen, die innerhalb des(der) Leitrohrs(Leitrohre) (112) positioniert sind.

6. Verfahren nach Anspruch 5, wobei das Rückspülen Bereitstellen eines Gasvolumens (185) umfasst, um das Bett von Filtermedien (160) umzuwälzen.

7. Verfahren nach Anspruch 5, wobei das abgetrennte Gas (145) das gesamte Gasvolumen (185) für den Rückspülschritt bereitstellt.

8. Verfahren nach Anspruch 5, wobei das abgetrennte Gas (145) einen Teil umfasst, der aus der Gruppe ausgewählt ist, bestehend aus Stickstoff und einem Brennstoffgas.

9. Verfahren nach Anspruch 5, wobei das abgetrennte Gas (145) Luft umfasst.

## Revendications

1. Système (100) destiné à recycler un gaz à partir d'un courant mixte liquide-gaz (140) comprenant :
un dispositif de séparation (115) ayant une entrée (142) en communication fluidique avec le courant mixte liquide-gaz (140), une sortie de liquide (190) et une sortie de gaz (195), le dispositif de séparation (115) étant configuré pour séparer le courant mixte liquide-gaz (140) en un liquide (150) en communication fluidique avec la sortie de liquide (190) et un gaz séparé (145) en communication fluidique avec la sortie de gaz (195) ; et
un dispositif de traitement d'eau (105) comprenant une cuve (107) contenant un lit de milieu filtrant (160) et un système de tuyau de descente (110) qui comprend un ou plusieurs tuyaux de descente (112) destinés à introduire un gaz par une ou plusieurs entrées de tuyau de descente positionnées à l'intérieur du tuyau de descente (112) et configurés pour générer le courant mixte liquide-gaz (140) pendant une opération de lavage à contre-courant, le dispositif de traitement d'eau (105) ayant en outre une entrée de gaz (187) en communication fluidique avec au moins une partie du gaz séparé (145) et une sortie de courant mixte liquide-gaz (144) en communication fluidique avec le courant mixte liquide-gaz (140),
un dispositif de mise sous pression (120) en communication fluidique avec le gaz séparé (145) et configuré pour mettre sous pression le gaz séparé (145) en communication fluidique avec l'entrée de gaz (187) du dispositif de traitement d'eau (105) .

2. Système (100) de la revendication 1, dans lequel le tuyau de descente (112) est positionné à l'intérieur du milieu filtrant (160).

3. Système de la revendication 1, dans lequel l'entrée de gaz (187) est en outre en communication fluidique avec une source de gaz d'appoint (165).

4. Système de la revendication 1, dans lequel le dispositif de traitement d'eau (105) comprend un dispositif de filtration et/ou un coalesceur.

5. Procédé de recyclage de gaz dans une opération de lavage à contre-courant, en particulier procédé d'utilisation d'un système de la revendication 1, l'opération de lavage à contre-courant comprenant le retrait de contaminants d'un lit de milieu filtrant (160) dans un dispositif de traitement d'eau (105),
le dispositif de traitement d'eau (105) comprenant une cuve (107) contenant un lit de milieu filtrant (160) et un système de tuyau de descente (110) destiné à introduire un gaz qui comprend un ou plusieurs tuyaux de descente (112) destinés à introduire un gaz et configurés pour générer le courant mixte liquide-gaz (140) pendant une opération de lavage à contre-courant, le dispositif de traitement d'eau (105) ayant en outre une entrée de gaz (187) en communication fluidique avec au moins une partie du gaz séparé (145) et une sortie de courant mixte liquide-gaz (144) en communication fluidique avec le courant mixte liquide-gaz (140),
le procédé comprenant :
le lavage à contre-courant du lit de milieu filtrant (160) par acheminement d'un gaz (185) et d'un fluide de lavage à contre-courant (155) à travers le lit de milieu filtrant (160) ;
la génération (202) d'un courant mixte liquide-gaz (140) à partir du lavage à contre-courant du lit de milieu filtrant (160) ;
le retrait (204) du courant mixte liquide-gaz (140) du lavage à contre-courant du lit de milieu filtrant (160) ;
la séparation du courant mixte liquide-gaz (140) en un liquide (150) et un gaz (145),
la séparation du courant mixte liquide-gaz (140) comprenant l'introduction du courant mixte liquide-gaz (140) dans un dispositif de séparation (115),
le dispositif de séparation (115) ayant une entrée (142) en communication fluidique avec le courant mixte liquide-gaz (140), une sortie de liquide (190) et une sortie de gaz (195), le dispositif de séparation (115) étant configuré pour séparer le courant mixte liquide-gaz (140) en un liquide (150) en communication fluidique avec la sortie de liquide (190) et un gaz séparé (145) en communication fluidique avec la sortie de gaz (195) ; et
le recyclage et l'utilisation d'au moins une partie du volume du gaz séparé (145) ;
la mise sous pression de la partie du volume du gaz séparé (145) dans un dispositif de mise sous pression (120),
le dispositif de mise sous pression (120) étant en communication fluidique avec le gaz séparé (145) et configuré pour mettre sous pression le gaz séparé (145) en communication fluidique avec l'entrée de gaz (187) du dispositif de traitement d'eau (105),
la mise sous pression du gaz séparé (145) comportant l'acheminement du gaz séparé (145) à travers le dispositif de mise sous pression (120), le dispositif de mise sous pression étant une soufflante, et/ou un compresseur, et/ou une pompe ;
l'utilisation de la partie mise sous pression du volume du gaz séparé (145) pour créer un mécanisme de pompe à air comprimé pendant le lavage à contre-courant par introduction du gaz séparé (145) à l'intérieur du/des tuyau(x) de descente (112) par une ou plusieurs entrées de tuyau de descente positionnées à l'intérieur du/des tuyau(x) de descente (112).

6. Procédé de la revendication 5, dans lequel le lavage à contre-courant comprend la fourniture d'un volume de gaz (185) pour basculer le lit de milieu filtrant (160).

7. Procédé de la revendication 5, dans lequel le gaz séparé (145) fournit la totalité du volume de gaz (185) pour l'étape de lavage à contre-courant.

8. Procédé de la revendication 5, dans lequel le gaz séparé (145) comprend un élément choisi dans le groupe constitué par l'azote et un gaz combustible.

9. Procédé de la revendication 5, dans lequel le gaz séparé (145) comprend de l'air.
